(19) Europäisches Patentamt / European Patent Office / Office européen des brevets

(11) **EP 3 985 895 B1**

(12) **EUROPEAN PATENT SPECIFICATION**

(45) Date of publication and mention of the grant of the patent:
**09.08.2023 Bulletin 2023/32**

(21) Application number: **20306231.0**

(22) Date of filing: **16.10.2020**

(51) International Patent Classification (IPC):
**H04L 1/00** *(2006.01)* **H04L 5/00** *(2006.01)*
**H04L 27/26** *(2006.01)* **H04B 7/0404** *(2017.01)*

(52) Cooperative Patent Classification (CPC):
**H04L 1/0041; H04L 1/007; H04L 1/0072;**
**H04L 27/2614;** H04B 7/0404; H04L 5/0007;
H04L 5/0053

(54) **DEVICE AND METHOD FOR TRANSMITTING CONTROL DATA WITH LOW PEAK-TO-AVERAGE POWER RATIO**

VORRICHTUNG UND VERFAHREN ZUR ÜBERTRAGUNG VON STEUERUNGSDATEN MIT NIEDRIGEM SPITZENLEISTUNG-ZU-MITTELLEISTUNG-VERHÄLTNIS

DISPOSITIF ET PROCÉDÉ DE TRANSMISSION DE DONNÉES DE COMMANDE À FAIBLE RAPPORT PUISSANCE DE CRÊTE/PUISSANCE MOYENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.04.2022 Bulletin 2022/16**

(73) Proprietor: **Eurecom**
**06410 Biot (FR)**

(72) Inventor: **KNOPP, Raymond**
**06410 BIOT (FR)**

(74) Representative: **Atout PI Laplace**
**Immeuble "Visium"**
**22, avenue Aristide Briand**
**94117 Arcueil Cedex (FR)**

(56) References cited:
• **QUALCOMM INCORPORATED: "Potential coverage enhancement techniques for PUCCH", 3GPP DRAFT; R1-2006821, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20200817 - 20200828 8 August 2020 (2020-08-08), XP051918271, Retrieved from the Internet: URL:https://ftp.3gpp.org/tsg_ran/WG1_RL1/T SGR1_102-e/Docs/R1-2006821.zip R1-2006821 Potential coverage enhancement techniques for PUCCH.docx [retrieved on 2020-08-08]**

• **HUAWEI ET AL: "Correction on formula for Low-PAPR sequence generation", 3GPP DRAFT; R1-1800843, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Vancouver, Canada; 20180122 - 20180126 13 January 2018 (2018-01-13), XP051385115, Retrieved from the Internet: URL:http://www.3gpp.org/ftp/tsg%5Fran/WG1% 5FRL1/TSGR1%5FAH/NR%5FAH%5F1801/Docs/ [retrieved on 2018-01-13]**

• **MODERATOR (QUALCOMM INCORPORATED): "FL summary of PUCCH coverage enhancement", 3GPP DRAFT; R1-2007473, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20200817 - 20200828 4 September 2020 (2020-09-04), XP051929942, Retrieved from the Internet: URL:https://ftp.3gpp.org/tsg_ran/WG1_RL1/T SGR1_102-e/Docs/R1-2007473.zip R1-2007473 FL summary of PUCCH coverage enhancement.docx [retrieved on 2020-09-04]**

**Description**

**TECHNICAL FIELD**

The invention generally relates to digital communications and in particular to a device and a method for transmitting control data with low Peak-to-Average Power Ratio (PAPR).

**BACKGROUND**

Mobile communication systems are progressing at an accelerated pace, in order to satisfy increasing demands in terms of real-time services and applications with higher capacities.

Mobile communication systems are rapidly progressing from a 4th generation (4G) mobile communication system to the future 5th generation (5G) mobile communication systems which are being standardized to provide rich, reliable and hyper-connected communications. In particular, 5G New Radio presents significant challenges.

A mobile communication system comprises a transmitter that transmits digital data comprising information symbols to one or more receivers through a transmission channel. The receiver receives and decodes the transmitted signal using a reverse processing as the one implemented at the transmitter. The digital data transmitted by the transmitter can comprise user data bits and control data bits.

The main existing transmission control data formats for 5G NR systems comprise uplink control channels, such as physical uplink control channel (PUCCH) and physical random access channel (PRACH). Control data can also be multiplexed or transmitted exclusively on the physical uplink shared channel (PUSCH). Different transmission formats exist for such control channels such as for example LTE/NR PUCCH formats 0, 1, 2, 3 and 4 considered in current 3GPP systems (LTE stands for "Long Term Evolution").

A significant challenge for improving the transmission of such control channel data is to provide the transmitter with a capacity of transmitting small payloads (around tens of bits) with low probability of error at very low signal-to-noise ratios.

Such challenge can be generally achieved both by optimizing the energy efficiency of the transmit waveform through:

- a minimization of the peak-to-average power ratio (PAPR), and
- a design of strong structured coding strategies permitting low-complexity detection algorithms.

Known solutions to reduce PAPR include peak windowing, scaling, and clipping. However, such approaches generate interference and distortions in the OFDM modulated signal which requires a further filtering to mitigate the interferences and distorsions.

Existing decoding algorithms used at the receivers to decode received signals corresponding to the current control channel formats (such as PUCCH) are based on sub-optimal reduced-complexity approaches. Such approaches consist of least-squares channel estimation based on the DMRS signals (DMRS stands for Demodulation Reference Signal) followed by quasi-coherent detection and soft-combining of repetitions from rate matching. These two operations yield soft-decisions for each of the coded bits. In the case of the RM code for example, a permutation is then applied to the 32 received soft-decisions to recuperate the bi-orthogonal structure of the code which is then amenable to reduced-complexity decoding via a fast Hadamard Transform as described in US8315185B2. For the polar-coded case, the soft-decisions are passed to one of the reduced-complexity polar decoding algorithms as described in Fast List Decoders for Polar Codes by Gabi Sarkis, Pascal Giard, Alexander Vardy, Claude Thibeault, and Warren J. Gross, IEEE Jounal on Selected Areas in Communications, VOL. 34, NO. 2, FEBRUARY 2016. In these two existing approaches, the algorithms are sub-optimal as the detection method uses separate channel estimation and quasi-coherent detection. Another possible solution would be to use a fully non-coherent receiver using the DMRS signals. However, such solution involves an increase in complexity, especially for a RM coded case with longer bit lengths.

There is accordingly a need for a transmission device and method that ensure low PAPR.

3GPP document R1-2006821 "Potential coverage enhancement techniques for PUCCH", from Qualcomm Incorporated, 3GPP TSG-RAN WG1 e-Meeting #102, August 17th - 28th, 2020, suggests to use DM-RS less non coherent transmission to carry uplink control information on PUCCH. A set of information bits is converted into a integer value , and a sequence is selected in a pool of sequences based on the integer value. The sequence is then transmitted using all the resource elements in the allocated PUCCH resources.

3GPP Change request R1-1800843 "Correction on formula for Low-PAPR sequence generation", from Huawei, HiSilicon, 3GPP TSG RAN WG1 AdHoc Meeting Vancouver, Canada, 22nd - 26th January 2018, discloses sequences generation for PUCCH with short UCI (1 or 2 bits) for PUCCH formats 0, 1, 3 and 4. The sequences are generated based on the base sequence group number, the base sequence number within the group, a cyclic shift and the resource block where the sequence is transmitted. A generated sequence is then multiplied by the complex valued symbol carrying the information bits.

3GPP document R1- 2007473 "FL summary of PUCCH coverage enhancement", 3GPP TSG RAN WG1 e-Meeting #102-e, August 17th - 28th, 2020, suggests the use of structured coding techniques combined with low PAPR sequences for longer payload (11 bits) when sequence based DM-RS less PUCCH is used.

Summary of the invention

In order to address these and other problems, independent claim 1 defines a transmitter according to the invention for transmitting a digital input message corresponding to control data used ir a control channel through a communication channel, the transmitter device comprising a set of transmit antennas, the message m comprising a number B of bits. The transmitter device comprises:

- a sequence selector configured to determine, from the B channel bits, a sequence ($r_l(m)$), associated with a sequence index ($l$) comprising a set of low peak-to-average power ratio vectors depending on the message;
- a code sequence generator configured to generate an outer code sequence ($w_l(m)$) from said B channel bits;
- a combiner configured to combine the sequence of low peak-to-average power ratio vectors ($r_l(m)$) with said outer code sequence ($w_l(m)$).

The transmitter device comprises a modulator for each transmit antenna configured to apply single-carrier or multicarrier modulation to the combined sequence, the transmitter device being configured to transmit the modulated combined sequence over the communication channel using the transmit antennas.

In one embodiment, the transmitter device further comprises a splitter configured to split the bitstream comprising said B channel bits into a first components of size $B_0$ and a second component of size $B_1$, such that $B = B_0 + B_1$, using a set of parameters.

The set of parameters may comprise user preferences and/or system preferences.

In some embodiments, each modulator may be an OFDM modulator providing OFDM symbols grouped into resource blocks, each resource block comprising resource elements. In such embodiments, the sequence ($r_l(m)$) of low peak-to-average power ratio vectors may comprise $L$ vectors of dimension $\alpha K$, where $L$ represents the number of OFDM symbols, K represents the minimal number of physical resource blocks and $\alpha$ represents the number of resource elements comprised in each resource block.

Advantageously, the combiner may be configured to multiply the sequence of low peak-to-average power ratio vectors ($r_{k,l}(m)$) by the outer code sequence ($w_l(m)$).

In one embodiment, wherein the outer code sequence $w_l(m)$ may satisfy $|w_l(m)| = 1$ for each message m and each vector $l$.

In some embodiments, the sequence selector may be configured to determine the sequence ($r_l(m)$) of low peak-to-average power ratio vectors such that the peak-to-average power ratio of the resulting time waveform after OFDM modulation is minimized.

In one embodiment, the sequence selector may be configured to determine the sequence ($r_l(m)$) of low peak-to-average power ratio vectors that minimizes the number of non-zero elements in the low peak-to-average power ratio vectors.

In a particular embodiment, the elements of the low peak-to-average power ratio vectors ($r_l(m)$) may have only one non-zero element set to 1.

In some embodiments, the code sequence generator may be configured to generate the outer code sequence ($w_l(m)$) as an orthogonal outer code depending on a code generation condition related to the product of the dimension of the low peak-to-average power ratio vectors ($\alpha K$) by the number of low peak-to-average power ratio vectors (L) with respect to a threshold, said threshold relating to the number B of channel bits, the code generation condition being satisfied if said product ($\alpha K$) is higher or equal to said threshold ($\alpha KL \geq 2^B$).

The threshold may be equal to two raised to the number B of channel bits ($2^B$).

In one embodiment, if the code generation condition is satisfied ($\alpha KL \geq 2^B$), an L-dimensional Discrete Fourier Transform-based orthogonal code may be used to generate said outer code sequence ($w_l(m)$).

In one embodiment, if the code generation condition is satisfied ($\alpha KL \geq 2^B$), and the number B of channel bits satisfy a channel bit condition according to which the number of channel bit is comprised between a lower threshold and an upper threshold, said lower threshold and said upper threshold depending on the size $B_0$ of the first component, the code sequence generator may be configured to generate the orthogonal outer code as a combination of $2^{B-B_0}L$-dimensional vectors.

The code sequence generator may be configured to generate the combination of $2^{B-B_0}$ L-dimensional vectors

from the set $\{\omega_L: \omega_{l,n} = e^{j2\pi ln/L}, l = 0,1, ..., L - 1, n = 0,1, ...,L - 1\}$, the orthogonal outer code ($w_l(m)$) being selected as element $\lfloor m2^{-B_0} \rfloor$ from the chosen set.

In one embodiment, if the number of channel bit is strictly higher than the upper threshold, the code sequence generator may be configured to generate the combination of vectors as a combination of $\left\lceil \frac{2^B}{12K} \right\rceil$ $L$-dimensional vectors from the set $\omega_L: \omega_{l,n} = e^{j2\pi ln/L}, l = 0,1, ..., L - 1, n = 0,1, ..., L - 1\}$, $w_l(m)$ being selected as element $\left\lfloor \frac{m}{12K} \right\rfloor$ from the chosen set.

In some embodiments, the code sequence generator may be configured to generate the outer code sequence $w_l(m)$ as a non coherent outer code if the code generation condition is not satisfied, the outer code $w_l(m)$ being chosen as a codeword $\lfloor m2^{-B_0} \rfloor$ from a ($L, B_1$) linear error correcting code, of length L and a rank $B_1$ corresponding to the size of the second component.

Independent claim 15 further provides a method according to the invention of transmitting a digital input message corresponding to control data used in a control channel through a communication channel, the message comprising a number of bits, said method comprising:

- determining, from the B channel bits, a sequence ($r_l(m)$) comprising a set of low peak-to-average power ratio vectors which depend on the message;
- generating an outer code sequence $w_l(m)$ from the B channel bits;
- combining the sequence of low peak-to-average power ratio vectors ($r_l(m)$) with said outer code sequence ($w_l(m)$),

the method further comprising applying single-carrier or multi-carrier modulation to the combined sequence and transmitting the modulated combined sequence over the communication channel using transmit antennas.

The embodiments of the invention accordingly improve the probability of correct detection.

Further, the embodiment of the invention allow for mitigation of inter-cell interference.

In some embodiments, there are provided two levels of protection for different types of payload information aggregated in a common message.

Advantageously, the embodiments of the invention are not require to use DMRS signals and are applicable to payload lengths up to 16 bits.

Further, the embodiments of the invention, when applied to PUCCH control channel, exhibit strictly bounded and lower or equal PAPR to PUCCH formats 0 and 1. In one particular configuration (single resource element transmission) 0 dB PAPR is achieved.

Further advantages of the present invention will become clear to the skilled person upon examination of the drawings and the detailed description.

## Brief description of the drawings

The accompanying drawings, which are incorporated in and constitute a part of this specification, illustrate various embodiments of the invention together with the general description of the invention given above, and the detailed description of the embodiments given below.

Figure 1 schematically represents an exemplary communication system implementing a transmitter according to some embodiments;
Figure 2 is a block diagram representing a transmitter, according to certain embodiments of the invention;
Figure 3 is a block diagram representing a code modulation device for generating a non-coherent code, according to an embodiment of the invention;
Figure 4 is a flowchart depicting a transmission method, according to an embodiment of the invention.

## Detailed description

Embodiments of the present invention provide devices and methods for transmitting control data that enable minimizing the Peak-to-Average Power Ratio (PAPR).

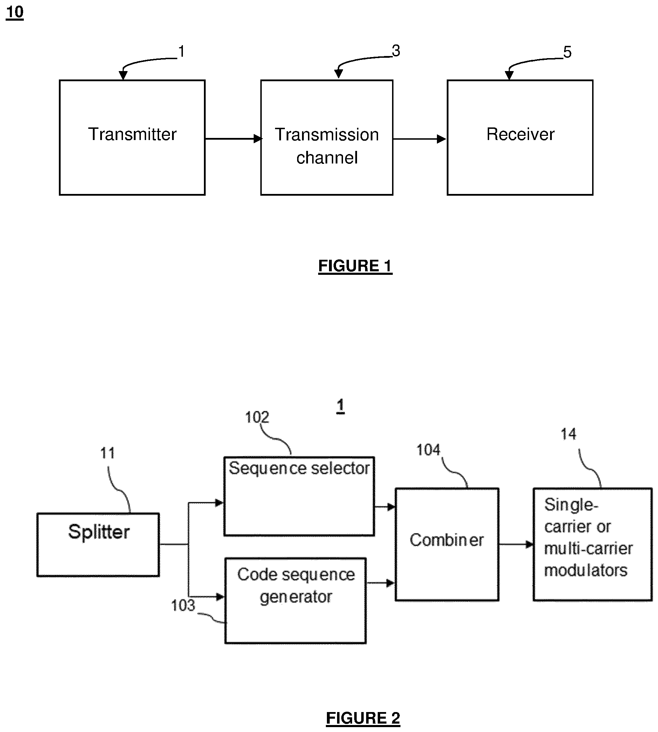

Figure 1 illustrates an exemplary communication system 10 in which embodiments of the invention can be implemented.

The communication system 10 may be for example a wireless communication system. The following description of embodiments of the invention will be made mainly with reference to a wireless communication system for illustration purpose although the skilled person will readily understand that the invention can also apply to other types of communication systems such as a wired system (for example optical fiber communication system).

The communication system 10 may comprise at least one transmitter device 1 (also referred to hereinafter as a "transmitter") configured to transmit a plurality of information symbols to at least one receiver device 5 (hereinafter referred to as "receiver") through a transmission channel 3.

The receiver 5 may be configured to receive the signal transmitted by the transmitter 1 and decode the received signal to recover the original data.

The transmission channel 3 may be any transmission channel adapted to transmit information symbols from the transmitter device 1 to the receiver device 5, depending on the type of the communication system, such as for example a wired connection channel, a wireless medium, an underwater communication channel, etc.

In an application of the invention to wireless communication systems such as ad-hoc wireless networks used in local area communications, wireless sensor networks and radio communication systems (e.g. LTE, LTE-advanced, 5G and beyond), the transmitter 1 and/or the receiver 5 may be any type of fixed or mobile wireless device configured to operate in a wireless environment.

The transmission channel 3 may be any wireless propagation medium adapted to such devices.

The transmitter 1 and/or the receiver 5 may be fixed or mobile and/or may be remotely monitored and/or controlled. The transmitter 1 and/or the receiver 5 may be equipped with power sources that provide power to the different components ensuring the operation of these devices (e.g. dry cell batteries, solar cells, and fuel cells).

The transmission channel 3 may represent any wireless network enabling IoT. Exemplary wireless networks comprise low-power short range networks and LPWANs. Exemplary LPWAN technologies comprise LTE-NB1 and NB-IoT.

Further, the transmission channel 3 may accommodate several pairs of transmitters 1 and receivers 5. In such embodiments, multiple access techniques and/or network coding techniques may be used in combination with error correction codes and modulation. Exemplary multiple access techniques comprise Time Division Multiple Access (TDMA), Frequency Division Multiple Access (FDMA), Code Division Multiple Access (CDMA), and Space Division Multiple Access (SDMA).

The transmission channel 3 may be a noisy channel. For example, the noise may result from the thermal noise of the system components and/or the intercepted interfering radiation by antennas. Other exemplary sources of noise comprise switching, manual interruptions, electrical sparks and lightning. In some embodiments, the total noise may be modeled by an additive white Gaussian noise (AWGN).

The transmission channel 3 may be a multipath channel using single-carrier or multi-carrier modulation formats such as OFDM (Orthogonal Frequency Division Multiplexing) for mitigating frequency-selectivity, interference and delays.

In some embodiments, data transmission in the communication system 10 may correspond to an uplink communication scenario during which the receiver 5 is configured to receive data from one or more transmitters 1 operating in a wireless environment. The receiver 5 may be a base station, a relay station, an eNodeB/gNodeB in a cellular network, an access point in a local area network or in ad-hoc network or any other interfacing device operating in a wireless environment. The transmitter 1 may be, without limitation, a mobile phone, a computer, a laptop, a tablet, a drone, an IoT device etc.

According to some embodiments, the transmitter 1 and/or the receiver 5 may be equipped with a plurality of transmit and/or receive antennas. In such embodiments, space-time coding and/or space-time decoding techniques may be used in combination with coded modulations for encoding data both in the time and space dimensions, thereby exploiting space and time diversities of multiple antennas.

The receiver 5 can be also integrated in the base stations. The receiver 5 may be configured to receive a signal $y_P$ transmitted by the transmitter 2 in a wireless channel. The channel may be noisy (for example channel with Additive White Gaussian Noise (AWGN) subjected to fading). The signal transmitted by the transmitter 1 may be further affected by echoes due to the multiple paths and/or the Doppler effect due to the transmitter and receiver having a non-zero relative velocity.

The transmitter 1 is configured for transmitting a digital input message m corresponding to control data used in a control channel through the communication channel 3.

According to some embodiments, the control data encoded at the transmitter 1 correspond to control data used in physical control channels such as uplink control channels.

Exemplary uplink physical control channels comprise PUCCH ('Physical Uplink Control Channels'), the control portion of PUSCH (Physical Uplink Shared Channel) and PRACH (Physical Random Access Channel). The Physical Random Access Channel (PRACH) may be used by an uplink user to contact a receiver (eNB base station for example).

Although the description will be made mainly with reference to uplink control channels such as PUCCH or the control portion of PUSCH, for illustration purpose, the skilled person will readily understand that the invention also applied to other uplink control channels. Exemplary PUCCHs comprise the LTE/NR PUCCH format 2 and the LTE/NR PUCCH formats 3 and 4 considered in current 3GPP systems.

The PAPR refers to a power characteristic that defines the average output power level of the power amplifier used in the transmitter 1 relative to the peak power. When the PAPR is high, the power amplifier of the transmitter 1 has to operate at a lower average power level. In contrast, a low PAPR enables the power amplifier at the transmitter to operate at a higher average power level with respect to the peak power. The PAPR of OFDM signals is defined as the ratio between the maximum instantaneous power and its average power.

Considering for example, a transmission of PUCCH data where the transmitted waveform makes use of prior information regarding synchronization with respect to the time window of the receiver 5 (for example a gNodeB), several PUCCH transmission formats in 5G NR can be used. The inventors have determined and analyzed corresponding PAPR values obtained for different PUCCH formats using a prior art transmission method, as described in the table 1 below:

**Table 1**

| PUCCH format | Transmission method | PAPR dB |
|---|---|---|
| 0 | 1-3 bit orthogonal transmission, cyclic time-shifts of a low-PAPR quaternary sequence, $L = 1,2$, $K = 1$ | 2.42 - 2.80 dB |
| 1 | 1-2 bit payload, orthogonal transmission (for 1-bit), non-orthogonal transmission (for 2-bit), low-PAPR frequency-domain sequences with orthogonal spreading in time, use of demodulation reference signals (DMRS), $L = 4,5,...,14$, $K = 1$ | 2.42 - 2.80 dB |
| 2 | >2 bit payload, non-orthogonal transmission, binary code, binary rate-matching, QPSK modulation, $L = 1,2$, arbitrary $K$ | 9.1 dB at 1% outage, 6.66 dB average |
| 3 | >2 bit payload, non-orthogonal transmission, binary code, binary rate-matching, $\pi/2$-BPSK, QPSK modulation, DFT precoding, $L = 4,5, ...,11$, $K = 2^\alpha 3^\beta 5^\gamma$ | QPSK : 6.30dB at 1% outage, 4.28dB average $\pi/2$-BPSK : 4.78dB at 1% outage, 3.28 dB average |
| 4 | >2 bit payload, non-orthogonal transmission, binary code, binary rate-matching, $\pi/2$-BPSK, QPSK modulation, DFT precoding, orthogonal time-spreading, $L = 4,5, ..., 11$, $K = 1$ | QPSK : 6.30dB at 1% outage, 4.28dB average $\pi/2$-BPSK : 4.78dB at 1% outage, 3.28 dB average |

Table 1 shows that:

- Formats 1, 3 and 4 correspond to low-PAPR configurations with multiple-symbols;

- Format 0 has low PAPR but was not designed for coverage because of the limitation to transmission in 1 or 2 symbols and thus is energy-limited.

In prior art approaches, the message index m corresponding to PUCCH format 0 control data is combined with a pseudo-random integer derived from system and user-specific parameters to select a low-PAPR quaternary sequence from a set of optimized sequences and to choose a cyclic time-shift of the selected sequence.

Format 2 has neither low-PAPR nor multi-symbol transmission for coverage and is used primarily in small-cell configurations. Format 1 uses low-PAPR sequences similar to Format 0 but without a message dependent cyclic time-shift. However, in prior art approaches, the sequence for PUCCH format 1 is further modulated in amplitude depending on the 1 or 2 bit message and repeated across $L - L_{DMRS}$ symbols, where $L_{DMRS}$ is the number of so-called DMRS symbols used. The DMRS symbols are not message dependent and can be used by the receiver (gNodeB) to resolve channel uncertainty through explicit channel estimation or through other existing methods. Format 1 using a prior art approach exhibits a bounded PAPR less than 2.8 dB. A prior art transmitter for transmission of PUCCH Format 3 and 4 use DFT-precoded QPSK or $\pi/2$-BPSK for low-PAPR rather than optimized quaternary sequences. For the case of $\pi/2$-BPSK, the prior art approaches for such formats 3 and 4 provide a PAPR of 4.78dB at a 1% outage for randomized payloads.

Similar to Format 1, Formats 3 and 4 also make use of 1, 2 or 4 DMRS which are similar payload-independent signals. a prior art transmitter for Formats 3 and 4, makes use, in terms of channel coding, of classical length 32 Reed-Muller codes for 3-11 bit payloads (3GPP specification 38.212: [38.212] NR: Multiplexing and Channel Coding, 3GPP Technical Specification, Release 16, V16.3, 2020-10-01). The 32-bit encoded bit stream is shortened or lengthened with rate-matching which amounts to truncation or repetition to fit the available resources. For more than 11 bits, the 3GPP polar code (3GPP specification 38.212) with interleaving and a different rate-matching procedure is used in the prior art. Following rate-matching and interleaving, the bit stream is scrambled using a pseudo-random sequence prior to modulation, in both cases. A prior art transmitter for Format 4 also includes a time-domain orthogonal spreading function on top of the modulation to allow for multiple-access.

The transmitter 1 according to the embodiments of the invention improves the probability of correct detection compared to such existing solutions, even in extreme coverage scenarios which are characterized by low signal-to-noise ratio.

Figure 2 represents a transmitter 1 corresponding to a Low-PAPR Concatenated Coding Scheme, according to some embodiments.

The transmitter 1 is configured to transmit a digital input message m corresponding to control data used in a control channel through the communication channel 3. The control channel may be for example an uplink control channel such as PUCCH, control component of PUSCH or PRACH.

Although the invention has particular advantages for downlink control channels, it should be noted that some aspects of the invention may be also applied to downlink control channels.

The input message m is defined as:

$$m = 0,1, \dots, 2^B - 1 \quad (1)$$

In Equation (1), B represents the number of channel bits constituting the message m.

The signal received at the receiver may be written as:

$$y_p = H_p x(m) + z_p \quad (2)$$

In equation (2), $y_p$ represents the signal vector in $N$ complex dimensions received on a receiver antenna port $p$, x(m) designates the $N$-dimensional modulated vector transporting $B$ channel bits corresponding to the message $m$=0,1,..., $2^B$-1, and $z_p$ represents the additive white Gaussian noise having real and imaginary components being independent and have variance $\sigma^2$ in each dimension. Further, the matrix $H_p$ is a $N \times N$ complex diagonal designating the complex value of the channel matrix representing the communication channel. The channel matrix $H_p$ has arbitrary components unknown to the receiver.

In some embodiment, the modulated signal may satisfy $\|x(m)\|$ = c $\forall m$, where c is an arbitrary constant.

In some embodiments, such as in the 3GPP 5G NR systems, the components of the modulated signal x(m) and the received signal $y_p$ may represent samples in frequency and time.

According to some embodiments, the transmitter 1 may comprise:

- A Low Peak-to-Average Power Ratio (PAPR) sequence selector 102 configured to determine a sequence $r_l(m)$ comprising a set of low peak-to-average power ratio vectors which depends on the message m from the B channel bits, the sequence is associated with a sequence index $l$;

- A code sequence generator 103 configured to generate an outer code sequence $w_l(m)$ from the B channel bits;

- A combiner 104 configured to combine the sequence of low peak-to-average power ratio vectors $r_l(m)$ provided by the frequency domain selector 102 with the outer code sequence ($w_l(m)$) delivered by the code sequence generator 103.

The transmitter 1 further comprises one single carrier or a multi-carriermodulator 14 for each transmit antenna, each modulator being configured to apply single-carrier or multicarrier modulation to the combined sequence and transmit it over the communication channel using the transmit antennas.

Each single carrier or multi-carrier modulator 14 is configured to convert the constructed codeword or vector of spatially multiplexed symbols from the time domain to the frequency domain using a single carrier or a multi-carrier modulation technique.

In some embodiments, the single carrier or multi-carrier modulators 14 are OFDM modulators (OFDM stands for Orthogonal Frequency-Division Multiplexing) configured to apply OFDM modulation the combined sequence.

The following description of some embodiments of the invention will be made mainly with reference to OFDM modulation using OFDM modulators for illustration purpose only although the invention applies to other types of single-carrier or multi-carrier modulation.

The OFDM modulators 14 are configured to convert the modulated symbols from the time domain to the frequency domain using a multicarrier modulation technique and spread the signals thus obtained over the $n_t$ transmission antennas of the transmitter 1, each transmission antenna being associated with an OFDM modulator.

Signals may be sent from the transmit antennas optionally after filtering, frequency transposition and amplification by at least one power amplifier provided at the transmitter 1.

The symbols of the vector x(m) may represent samples in both time and frequency. In particular, the frequency dimensions may be adjacent carriers in a multi-carrier symbol (for example an OFDM symbol) and the time dimensions may refer to different multi-carrier symbols. In general, a time or frequency dimension is designated by a Resource Element.

The number $N$ of dimensions of the received signal $y_p$ may be a multiple of $KL$ (i.e. $N$ is the product of $KL$ with some integer $\alpha$).

More generally, $\alpha K$ represent the number of channel dimensions per symbol of the outer channel code. In the context of some time-domain spread-spectrum systems, $\alpha K$ may be the spreading factor. $L$ represents the time-window over which the message is encoded in the sense that the total time the channel is used to convey the message is directly proportional to $L$.

In the embodiments using OFDM modulation, $L$ represents the number of OFDM symbols on which the information is spread and $K$ represents the minimal number of physical resource blocks (OFDM carriers). $\alpha$ represents the number of OFDM carriers per resource block and $\alpha K$ represents the number of signaling dimensions per vector.

As used herein, a Resource Element (RE) refers to the smallest defined unit consisting of one OFDM sub-carrier during one OFDM symbol interval. Each Resource Block (RB) designates a number of Resource Elements (RE). Resource blocks (RB) are used to map physical channels to resource elements RE.

In a 3GPP application of the invention, the integer $\alpha$ is equal to 12 so that the number $N$ is given by $N = 12KL$. Accordingly, each resource block contains 12 complex dimensions or resource elements over which coding is performed. In such 3GPP application, $K$ may be chosen in the range of 1 to 16 for example. Further, the number of symbols $L$ may be chosen in the range of 1 to 14 symbols for example, or may be more important if multiple slots are used to signal the B bits.

The following description will be made mainly with reference to the number of signaling dimensions per vector $\alpha K$ equal to $12K$ ($\alpha = 12$) used in a 3GPP OFDM embodiment. However, the skilled person will readily understand that the invention is not limited to such value of $\alpha K$ and similarly applies to any number of dimensions.

The sequence selector 102 ensures that the low PAPR sequence varies from a sequence index (corresponding to a symbol index in an embodiment using OFDM modulation) to another sequence index.

The transmitter 1 may further comprise a space-time encoder (not represented) for delivering a code word using a space time code before performing OFDM modulation. In such embodiment, the space-time encoder is arranged between the combiner 104 and OFDM modulator. The space-time encoder may be configured to perform space-time coding or spatial multiplexing in embodiments in which the transmitter 1 is equipped with a plurality of transmit antennas. Alternatively a beamforming unit or an antenna selection unit may be arranged between the combiner 104 and the OFDM modulators 14.

It should be noted that the receiver 5 implements a reverse processing of the processing implemented in transmission.

In some embodiments, the transmitter 1 may further comprise a splitter 100 configured to split the bitstream comprising the B channel bits into two components comprising a first component of size $B_0$ and a second component of size $B_1$, such that $B = B_0 + B_1$, using a set of splitting parameters.

In one embodiment, the components $B_0$ and $B_1$ may be such that $B_0 < B_1$.

For example, in one embodiment, the $B_0$ bits may correspond to the least-significant bits of the message m.

In one exemplary embodiment, $B_0$ may be chosen as equal to $\lfloor \log_2 \alpha K \rfloor$.

In one embodiment, the splitting parameters comprise user preferences and/or system preferences.

The partition of the input bitstream of $B$ channel bits enables providing two levels of error protection as the decoding process for the $B_0$ bits has a lower error probability than the decoding process of the $B_1$ bits. The sequence of $L$ low-PAPR vectors are used to signal in the $K$ PRBs and $L$ symbols potentially across multiple time slots.

The sequence of low-PAPR vectors $r_l(m)$ may advantageously include a randomization of the resource elements both in the form of using different vectors in each symbol and using different frequency positions if the vectors have less non-zero elements than the total number of dimensions.

In some embodiments, the sequence $r_l(m)$ of low peak-to-average power ratio vectors provided by the sequence selector 102 may comprise $L$ vectors of dimension $\alpha K$, where $L$ designates the Number of OFDM symbols and $K$ representing the minimal number of resources as defined above.

In some embodiments, the combiner 104 may be configured to multiply the sequence of low peak-to-average power ratio vectors $r_{k,l}(m)$ provided by the sequence selector 102 by the outer code sequence ($w_l(m)$) provided by the code sequence generator 103.

In one embodiment, the outer code sequence $w_l(m)$ *may* satisfy the condition according to which its absolute value is equal to one ('1') for each message m and each vector $l$:

$$|w_l(m)| = 1 \quad (3)$$

for each message m and each vector $l$.

The overall coded sequence $x_{k,l}(m)$ delivered by the combiner 104, for each symbol and resource element, is then given by:

$$x_{k,l}(m) = r_{k,l}(m)\, w_l(m) \quad (4)$$

In some embodiments, the sequence selector 102 may be configured to determine the low PAPR sequence $r_l(m)$ comprising a set of low peak-to-average power ratio vectors such that the peak-to-average power ratio of the resulting time waveform after OFDM modulation is minimized (first selection criterion).

The resulting time waveform $s_l(m, t)$ after the OFDM modulation performed by the OFDM modulators is given by:

$$s_l(m, t) = \sum_{k=0}^{12K-1} r_{k,l}(m)\, e^{-j2\pi k\Delta f(t-N_{CP,l}T_c)} \quad (5)$$

For $t$ in an interval $t_{\text{start},l} \le t \le t_{\text{start},l} + (N_u^\mu + N_{CP,l})T_c$ corresponding to the time interval of OFDM symbol $l$ starting at time $t_{\text{start},l}$. In Equation (5), $\Delta f$ and $T_c$ correspond to physical parameters relating to the OFDM modulation. The additional parameter $N_{CP,l}$ is the cyclic prefix length in samples and Nu is the OFDM symbol size in samples. The cyclic prefix ensures that the signal at time $t_{\text{start},l} \le t \le t_{\text{start},l} + N_{CP,l}T_c$ is identical to the signal in the time interval $(t_{\text{start},l} + N_u^\mu T_c) \le t \le (t_{\text{start},l} + (N_u^\mu + N_{CP,l})T_c)$.

It should be noted that Equation (5) corresponds to a simple case provided herein to facilitate the understanding of the invention. In some embodiments, an alternative to equation (5) may be used depending on the application of the transmitter. For example, a more complex variant of Equation (5) may be used in order to into account for small physical frequency offsets or particularities of the resource grid in a 5G NR implementation, for certain air interface configurations.

In a 3GPP 5G NR embodiment for example, $\Delta f$ can take on the values 15,30,60,120,240 kHz and $T_c = 508.64\, ps.$

The PAPR is defined is then defined as:

$$\text{PAPR}(\mathbf{r}_l(m)) = \frac{\max_t |s_l(m,t)|^2}{\lim_{T\to\infty} \frac{1}{T} \int_0^T |s_l(m,t)|^2 dt} \quad (6)$$

In Equation 3, $\max_t |s_l(m, t)|^2$ represents the maximum instantaneous power and $\lim_{T\to\infty} \frac{1}{T} \int_0^T |s_l(m, t)|^2 dt$ represents its average power.

For large enough value of the number $N$, equation (6) can be rewritten as :

$$\text{PAPR}(\mathbf{r}_l(m)) \approx \frac{\max_{n=0,1,\dots,N} \left|\sum_{k=0}^{\alpha K-1} r_{k,l}(m)\, e^{-j2\pi kn/N}\right|^2}{\sum_{k=0}^{\alpha K-1} |r_{k,l}(m)|^2} \quad (7)$$

Equation (7) may be implemented using a fast Fourier Transform when optimizing the vectors for low PAPR.

In some embodiments, the sequence selector 102 may be further configured to determine the low PAPR

sequence ($r_l(m)$) of low peak-to-average power ratio vectors that limits the number of non-zero elements in the low peak-to-average power ratio vectors (second selection criterion).

The second criterion for choosing the low-PAPR vectors consisting in minimizing the number of non-zero elements enables both minimizing the complexity in the detection of the overall code sequence x(m) and also mitigating the effects of multipath propagation.

For example, in the 3GPP specification 38.211 ([38.211] NR; Physical Channels and Modulation, 3GPP Technical Specification, Release 16, V16.3, 2020-10-01), sequences of length 6,12,18 and 24 are proposed using vectors with elements in the quaternary set (QPSK modulation), $e^{j\pi q/4}$, q = -3, -1,1,3. In a 3GPP embodiment of the invention, the 3GPP sequences can be augmented to include new minimum PAPR sequences of length 3 and 6 in an 8-ary set, $e^{j\pi q/4}$, q = 0,1,2,3,4,5,6,7, as shown respectively in Table 2 which represents Minimal-PAPR sequences of length 3 (for a PAPR equal to 2.22 dB) and Table 3 which represents Minimal-PAPR sequences of length 6 (for a PAPR equal to 2.32 dB):

**Table 1**

| index | 8-ary sequence |
|---|---|
| 0 | (0,0,4) |
| 1 | (0,1,6) |
| 2 | (0,2,0) |
| 3 | (0,3,2) |
| 4 | (0,4,4) |
| 5 | (0,5,6) |
| 6 | (0,6,0) |
| 7 | (0,7,2) |

**Table 2**

| Index | 8-ary sequence | Index | 8-ary sequence |
|---|---|---|---|
| 0 | (0,0,1,4,6,3) | 16 | (0,4,1,0,6,7) |
| 1 | (0,0,3,5,1,6) | 17 | (0,4,3,1,1,2) |
| 2 | (0,0,5,3,7,2) | 18 | (0,4,5,7,7,6) |
| 3 | (0,0,7,4,2,5) | 19 | (0,4,7,0,2,1) |
| 4 | (0,1,1,7,6,2) | 20 | (0,5,1,3,6,6) |
| 5 | (0,1,3,7,2,0) | 21 | (0,5,3,3,2,4) |
| 6 | (0,1,5,0,5,3) | 22 | (0,5,5,4,5,7) |
| 7 | (0,1,7,6,3,7) | 23 | (0,5,7,2,3,3) |
| 8 | (0,2,1,1,7,4) | 24 | (0,6,1,5,7,0) |
| 9 | (0,2,3,2,2,7) | 25 | (0,6,3,6,2,3) |
| 10 | (0,2,5,2,6,5) | 26 | (0,6,5,6,6,1) |
| 11 | (0,2,7,3,1,0) | 27 | (0,6,7,7,1,4) |
| 12 | (0,3,1,6,5,5) | 28 | (0,7,1,2,5,1) |
| 13 | (0,3,3,4,3,1) | 29 | (0,7,3,0,3,5) |
| 14 | (0,3,5,5,6,4) | 30 | (0,7,5,1,6,0) |
| 15 | (0,3,7,5,2,2) | 31 | (0,7,7,1,2,6) |

As shown in the tables 2 and 3, there are no two sequences that are cyclic shifts of each other when transformed by inverse discrete Fourier transforms of order 3 (Table 1) and 6 (Table 2). The length 6 sequences have lower PAPR than the 3GPP sequences (Table 5.2.2.2-1 in 3GPP specification 38.211).

In one embodiment, the elements of the low peak-to-average power ratio vectors $\mathbf{r}_l(m)$ may have only one non-zero element set to 1.

Such simplest case where the elements of $\mathbf{r}_l(m)$ have only one non-zero element set to 1 corresponds to a single resource element used among the $\alpha K$ and results in the minimum complexity receiver (5) for the overall code sequence. Furthermore, it provides the lowest PAPR and could be used for extreme coverage scenarios.

In the following description, the number of non-zero carriers in the $\mathbf{r}_l(m_0)$ vectors will be denoted $K_0$. In an exemplary application of the invention to 3GPP, $K_0 \in \{1,3,6,12,24\}$.

Although limited here to 24 dimensions, longer sequences may be used depending on the needs. For instance, truncated or extended Zadoff-Chu sequences may be used to provide reasonably-limited PAPR.

The transmitted sequence in each OFDM symbol is indexed by two parameters $(k_{l,0}(m), k_{l,1}(m))$, where $k_{l,0}(m)$ designates the frequency offset and $k_{l,1}(m)$ designates a cyclic-shift. The frequency offset $k_{l,0}(m)$ may be in the range

$$k_{l,0}(m) = 0,1,\dots,\frac{\alpha K}{K_0} - 1$$

and corresponds to the first non-zero element in the low PAPR sequence vector. The parameter $k_{l,1}(m)$ corresponding to a cyclic-shift may be in the range $k_{l,1}(m) = 0,1,\dots,K_0 - 1$.

Considering $\mathbf{r}_l^0$ denoting the base sequence used for a symbol $l$, the transmitted sequence is then given by

$$r_{l,k}(m) = \begin{cases} r_{l,k-k_0}^0 e^{-j2\pi k_{l,1}(m)(k-K_0)/K_0} & k_{l,0}(m) \le k < k_{l,0}(m) + K_0 \\ 0 & \text{otherwise} \end{cases} \quad (8)$$

For example, if $K_0 = 1$, $\mathbf{r}_l^0 = 1$.

In some embodiments, the frequency offset $k_{l,0}(m)$ and the cyclic-shift $k_{l,1}(m)$ may depend on the transmitted message and/or may be scrambled by a pseudo-random sequence initialized by system parameters such as for example and without limitation: the cell identification number and/or the user-dependent higher-layer configuration and/or user identification numbers. This ensures both whitening of the spectral characteristics of the transmitted waveform and exploiting frequency diversity to fading and interference through frequency hopping via $k_{l,0}$.

To facilitate the understanding of some embodiments of the invention, in the following description, the frequency offset $k_{l,0}(m)$ and the cyclic-shift $k_{l,1}(m)$ will be considered as equal to:

$$k_{l,0}(m) = (k_0(m) + k_{l,0}') \bmod \frac{\alpha K}{K_0} \quad (9)$$

$$k_{l,1}(m) = (k_1(m) + k_{l,1}') \bmod K_0 \quad (10)$$

In Equations (9) and (10), $k_{l,n}'$ designates the pseudo-random components that are symbol and system parameter dependent, while $k_n(m)$ are the message dependent components.

The code sequence generator 103 may be configured to generate the outer code sequence $w_l(m)$, according to different approaches, depending on the combinatorial configuration of the resource grid and number of bits $B$.

In some embodiments, the code sequence generator 103 may be configured to generate the outer code sequence $w_l(m)$ as an orthogonal outer code depending on a code generation condition related to $\alpha KL$ with respect to a threshold related to the number $B$ of channel bits, the code generation condition being satisfied if $\alpha KL$ (for example 12KL for a 3GPP embodiment) is higher or equal to the threshold:

In one embodiment, the threshold may be equal to two raised to the number B of channel bits. The code generation may be then defined by:

$$\alpha KL \ge 2^B \quad (11)$$

If the code generation condition (11) is satisfied, there are sufficient signaling dimensions to allow for orthogonal transmission.

In particular, for a 3GPP embodiment, the code generation condition may be:

$$12KL \geq 2^B \quad (12)$$

In one embodiment, if the code generation condition is satisfied ($\alpha KL \geq 2^B$), the code sequence generator 103 may use an $L$-dimensional DFT-based orthogonal code (DFT stands for Discrete Fourier Transform) to generate the outer code sequence $w_l(m)$.

In particular, if the code generation condition is satisfied ($\alpha KL \geq 2^B$), and the $B$ channel bits satisfy a channel bit condition defined by a lower threshold and a upper threshold which both depend on $B_0$, the code sequence generator 103 may be configured to generate the orthogonal outer code as a combination of $2^{B-B_0}$ $L$-dimensional vectors. The channel bit condition is satisfied if the number B of channel is comprised between the lower threshold and the upper threshold.

In one embodiment, the lower threshold $B_0$ may be equal to $B_0$ and the upper threshold $B_0 + \lfloor \log_2 L \rfloor$ may be equal such that the channel bit condition is given by:

$$B_0 \leq B \leq B_0 + \lfloor \log_2 L \rfloor \quad (13)$$

In one embodiment, if the code generation condition and the channel bit condition are satisfied, the code generator 103 may be configured to generate a combination of $2^{B-B0}$ $L$-dimensional vectors from the set:

$$\{\boldsymbol{\omega_L}: \omega_{l,n} = e^{j2\pi ln/L}, l = 0,1, \dots, L - 1, n = 0,1, \dots, L - 1\} \quad (14)$$

The orthogonal outer code $w_l(m)$ may be then selected as element $\lfloor m2^{-B_0} \rfloor$ from the chosen set defined by (14).

In such case:

- $k_0(m)$ may be set to set to

$$k_0(m) = \left\lfloor \frac{m \bmod 2^{B_0}}{2^{\lfloor \log_2 K_0 \rfloor}} \right\rfloor \quad (14.1)$$

- $k_1(m)$ may be set to

$$k_1(m) = m \bmod 2^{B_0} \bmod K_0 \quad (14.2)$$

- $w_l(m)$ may be then selected as element $\lfloor m2^{-B_0} \rfloor$ from the chosen set $\omega_L$ (14.3).

It should be noted that in such embodiment, the message-dependent frequency-shift $k_0(m)$ is independent of the $B_1$ bits. Further, it should be noted that unequal error protection and reduced-complexity decoding are enabled, even if $L$ and $\alpha K$ are not powers of 2.

Alternatively, if the number of channel bits is strictly higher than the upper threshold (in the above example if $B > B_0 + \lfloor \log_2 L \rfloor$), the code sequence generator 103 is configured to generate the combination of vectors as any

combination of $\left\lceil \frac{2^B}{\alpha K} \right\rceil$ $L$-dimensional vectors from the set:

$$\boldsymbol{\omega_L}: \omega_{l,n} = e^{j2\pi ln/L}, l = 0,1, \dots, L - 1, n = 0,1, \dots, L - 1\} \quad (15)$$

The code sequence $w_l(m)$ is then selected as element $\left\lceil \frac{m}{\alpha K} \right\rceil$ from the chosen set $\omega_L$ as defined by (15).

In such case:

- $k_0(m)$ is set to

$$k_0(m) = \left\lfloor \frac{m \bmod \alpha K}{2^{\lceil \log_2 K_0 \rceil}} \right\rfloor \quad (15.1)$$

- $k_1(m)$ is set to

$$k_1(m) = (m \bmod \alpha K) \bmod K_0 \quad (15.2)$$

In the above embodiment, it should be noted that although the message-dependent frequency-shift $k_0(m)$ may depend on the $B_1$ bits, detection of the $B_0$ bits is enabled independently of the $B_1$ bits without ambiguity. Further, it should be noted that unequal error protection and reduced-complexity decoding are enabled, even if $L$ and $\alpha K$ are not powers of 2.

In some embodiments, code sequence generator 103 may be configured to generate the outer code sequence $w_l(m)$ as a non-coherent outer code is the code generation condition is not satisfied ($\alpha KL < 2^B$).

In one embodiment, when there are insufficient signaling dimensions to allow for orthogonal transmission a $(L, B_1)$ non-coherent code may be used to generate the $w_l(m)$ sequence.

In such embodiment, the outer code $w_l(m)$ being chosen as a codeword $\lfloor m2^{-B_0} \rfloor$ from a $(L, B_1)$ linear error correcting code, having a length L and a rank $(B_1)$, the linear error correcting code being represented by a generator matrix $G(B_1, L)$ given in a systematic form:

$$G(B_1, L) = (I_L \quad G_{L \times (B_1)-L}) \quad (16)$$

In equation 9, $I_L$ designates the identity matrix of dimensions $L \times L$ and $G_{L \times B_1-L}$ designates a rectangular matrix comprising $L$ lines or row vectors and $B_1 - L$ columns or column vectors. The linear error correcting code may be generated for example as described in EP application N°20305929.0.

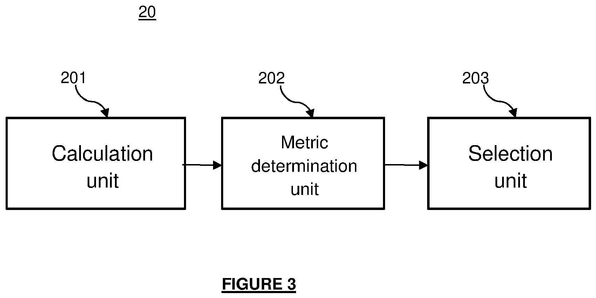

EP N°20305929.0 describes a coded modulation device for determining such linear error correcting code as represented in Figure 3.

As shown in figure 3, the coded modulation device 20 comprises:

- a calculation unit 201 configured to determine two or more candidate generator matrices, each candidate generator matrix defining a linear error correcting code and comprising values selected from a predefined set of values, each candidate generator matrix providing a set of codeword vectors from input vectors, the input vectors comprising values selected from the predefined set of values;
- a metric determination unit 202 configured to associate a vector metric to each pair of codeword vectors provided by each candidate generator matrix for a predefined modulation scheme and to associate a matrix metric to each candidate generator matrix, a matrix metric associated with a candidate generator matrix being the minimum value among the vector metrics associated with the pairs of codeword vectors provided by the candidate generator matrix;
- a selection unit 203 configured to select the one or more candidate generator matrices that are associated with the highest matrix metric among the two or more candidate generator matrices.

The linear error correcting code generated is represented by the selected one or more candidate generator matrices.

The selection unit 203 is configured to select, among the one or more candidate generator matrices associated with the highest matrix metric, the candidate generator matrix that is associated with the highest matrix metric and that provides a minimum number of pairs of codeword vectors that are associated with a vector metric equal to the highest matrix metric, these pairs of codeword vectors comprising a zero-valued codeword vector and a non-zero valued codeword vector.

The calculation unit 201 may be configured to previously determine a first set of candidate generator matrices comprising two or more candidate generator matrices and to determine at least one candidate generator matrix from the first set of candidate generator matrices.

The calculation unit 201 may be configured to determine extended codeword vectors from the codeword vectors provided by the selected one or more candidate generator matrices using a code extension by applying a complex or a real Hadamard matrix of one or more codes.

Each pair of codeword vectors may comprise a first codeword vector and a second codeword vector, the calculation unit 201 being configured to determine a first value by mapping the first codeword vector using the predefined modulation scheme and to determine the second value by mapping the second candidate vector using the predefined modulation scheme, the metric determination unit 202 being configured to determine the vector metric associated with each pair of codeword vectors as the absolute value of the pairwise correlation between the first value and the second value.

The linear error correcting code may be binary or quaternary or 4-aray code.

In the embodiments, where the outer code $w_l(m)$ is chosen as a codeword $\lfloor m2^{-B_0} \rfloor$ from a $(L, B_1)$ linear error correcting code, $k_0(m)$ may be set to:

$$k_0(m) = \left\lfloor \frac{m \bmod 2^{B_0}}{2^{\lceil \log_2 K_0 \rceil}} \right\rfloor \quad (17)$$

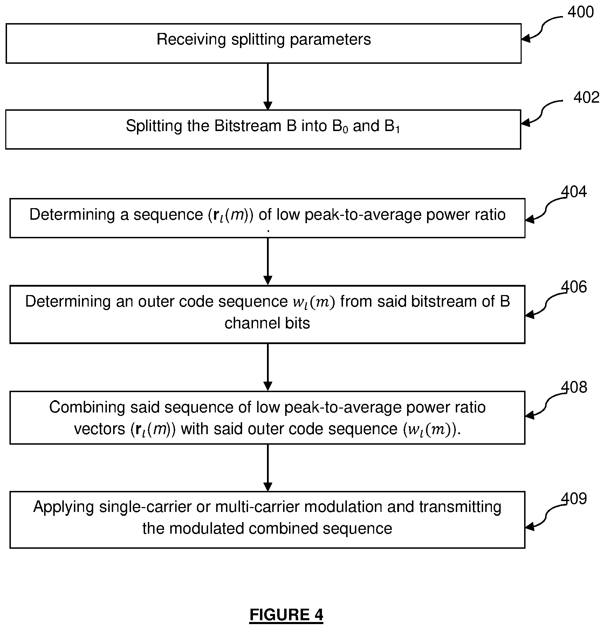

Figure 4 is a flowchart representing a method of transmitting a digital input message m defined as m = 0,1,..., $2^B$ - 1corresponding to control data used in control channel (such as for example an uplink control channel) through a communication channel 3, according to some embodiments.

In step 404, a sequence $(r_l(m))$ of low peak-to-average power ratio vectors which depends on the message and on the sequence index is determined from the bitstream of B channel bits. The channel bits may be previously split in step 402 into the two components comprising the first component of size $B_0$ and the second component of size $B_1$, such that $B = B_0 + B_1$, using a set of splitting parameters (for example user and/or system preferences) received at step 400.

In step 406, an outer code sequence $w_l(m)$ is generated from the B channel bits. The outer codes sequence may be generated depending on the code generation condition (given by (11)) using an orthogonal code (for example according to equations (14) or (15)) or a non-coherent code. The non-coherent code may be chosen as a codeword $\lfloor m2^{-B_0} \rfloor$ from a $(L, B_1)$ linear error correcting code, having a length L and a rank $(B_1)$, the linear error correcting code being represented by a generator matrix $G(B_1,L)$ according to equation (16).

In step 408, the sequence of low peak-to-average power ratio vectors $(r_l(m))$ obtained in step 404 may be combined with the outer code sequence $(w_l(m))$ obtained on step 406. Step 408 may comprise multiplying the sequence of low peak-to-average power ratio vectors $r_{k,l}(m)$ obtained in step 404 by the outer code sequence $(w_l(m))$ obtained in step 406 according to equation (4).

In step 409, a single-carrier or multi-carrier modulation (for example OFDM modulation) is applied to the combined sequence obtained in step 408 and then the modulated combined sequence is transmitted over the communication channel 3 using transmit antennas.

The use of such non-coherent code also allows for both reduced-complexity decoding and unequal error protection.

According to the embodiments of the invention, there is further provided an unequal Error Protection and Reduced-Complexity Receiver 5.

In the embodiments where the components $B_0$ and $B_1$ are such that $B_0 < B_1$, the error probability for the first $B_0$ bits is lower, offering unequal error protection.

In one embodiment, the receiver 5 may be a two-step receiver which first decodes $B_0$ by non-coherently combining the L received symbols. This enables significantly reducing computational complexity, especially in the case of the larger payload sizes.

A general case of the detection problem defined by equation (18) is considered:

$$\boldsymbol{y}_{l,p} = \mathbf{H}_{l,p}\mathbf{r}_l(m)w_l(m) + \boldsymbol{z}_{l,p}, l = 0, ..., L - 1 \quad (18)$$

In Equation (17), $\mathbf{H}_{l,p}$ is defined by $\mathbf{H}_{l,p}$ = diag($H_{l,k,p}$) where $H_{l,k,p}$ is the complex channel response for OFDM symbol $l$ and subcarrier $k$ on antenna port $p$.

In one embodiment, the receiver 5 may be a near-optimal receiver 5 for a completely unknown channel realization configured to determine an estimate $\hat{m}$ of the original message m by solving the optimization problem defined by:

$$\hat{m} = \text{argmax}_m \sum_{p=0}^{P-1} \left| \sum_{l=0}^{L-1} \boldsymbol{y}_{l,p} \mathbf{r}_l^H(m) w_l^*(m) \right|^2 \qquad (19)$$

Alternatively, the receiver 5 may be a low-complexity receiver which first detects the $B_0$ bits (first detection step) and then separately detects the remaining $B_1$ bits (second detection step).

For example, considering if $B \le B_0 + \lfloor \log_2 L \rfloor$, corresponding to the Orthogonal scheme defined by (13) or to a non-coherent code for the non-orthogonal case, the receiver 5 may comprise a detector for detecting the first $B_0$ bits (in the first detection step) defined by determining an estimation $\hat{m}_0$ of the $B_0$ bits of the original message m:

$$\hat{m}_0 = \text{argmax}_{m_0=0,1,\ldots,2^{B_0}-1} \sum_{p=0}^{P-1} \sum_{l=0}^{L-1} \left| \boldsymbol{y}_{l,p} \mathbf{r}_l^H(m_0) \right|^2 \qquad (20)$$

The receiver 5 may then determine an estimation $\hat{m}_1$ of the remaining $B_1$ bits of the original message m (in the second detection step) as:

$$\hat{m}_1 = \text{argmax}_{m_1=0,1,\ldots,2^{B_1}-1} \sum_{p=0}^{P-1} \left| \sum_{l=0}^{L-1} \boldsymbol{y}_{l,p} \mathbf{r}_l^H(\hat{m}_0) w_l^*(m_1 2^{B_0}) \right|^2 \qquad (21)$$

In some embodiments, $\hat{m}$ may be defined from $\hat{m}_0$ and $\hat{m}_1$. In one embodiment, $\hat{m}$ may be defined as:

$$\hat{m} = \hat{m}_0 + \hat{m}_1 2^{B_0} \qquad (22)$$

Assuming that $\hat{m}$ is defined according to equation (22), from a complexity standpoint, in the first step of the detection, the number of complex multiplications may be $P2^{B_0}LK_0$, while in the second step of the detection, the number of complex multiplications may be $P2^{B_1}L$. For example, the total of complex multiplications for $P = 1$, $K = 1$, $L = 14$, $K_0$ = 3, $B_0 = 3$, $B_1 = 8$ is equal to 3920 complex multiplications.

In comparison, a full receiver defined by equation (19) would require 344064 complex multiplications. Performance may be still increased by integrating a list of several hypotheses in addition to the one corresponding to the maximum defined by equation (19) at the expense of increasing the second term governing the complexity. For example, with two hypotheses, the total complexity would rise to 7504 complex multiplications.

In the embodiments corresponding to the Orthogonal scheme defined by (14), the receiver 5 may comprise a detector which first detects the $B_0$ bits (first detection step) by providing an estimate $\hat{m}_0'$ of the $B_0$ bits of the of the original message m and then detects the remaining $B_1$ bits (second detection step) by providing an estimate $\hat{m}_1'$ of the $B_1$ bits of the original message m according to:

$$\hat{m}_0' = \text{argmax}_{m_0=0,1,\ldots,12K-1} \sum_{p=0}^{P-1} \sum_{l=0}^{L-1} \left| \boldsymbol{y}_{l,p} \mathbf{r}_l^H(m_0) \right|^2, \quad \hat{m}_0 = \hat{m}_0' \bmod 2^{B_0} \qquad (23)$$

$$\hat{m}_1 = \text{argmax}_{m_1=0,1,\ldots,2^{B_1}-1} \sum_{p=0}^{P-1} \left| \sum_{l=0}^{L-1} \boldsymbol{y}_{l,p} \mathbf{r}_l^H(\hat{m}_0') w_l^*(m_1 2^{B_0}) \right|^2 \qquad (24)$$

Advantageously, the transmission device and method according to the embodiments of the invention enable providing significant mitigation for inter-cell interference in a communication system 1 where control channel transmissions (for example PUCCH transmissions) from adjacent cells 1 (transmitters) are received by the receiver 5 (base station of gNodeB type for example). This generally occurs when the transmission scheme is configured with a small number of non-zero elements (1,3,6) in the low-PAPR sequences and consequently uses many dimensions for frequency-hopping. If the cell-specific parameters provide randomization of the hopping sequence, interference from adjacent cells do not fall on the same frequency resources as the target transmission with high probability and consequently do not greatly affect the probability of correct detection. Moreover, because of the bursty nature of the transmission scheme, it is also tolerant to very high interference levels.

The embodiments of the invention as claimed may be similarly applied for multiple-access within the same cell through appropriately chosen hopping patterns by the receiver 5 (gNodeB for example).

The communication system 10 according to the embodiments of the invention may be used in various applications such as Machine-To-Machine (M2M), Web-of-Things (WoT), and Internet of Things (IoT) (for example vehicle-to-everything V2X communications) involving networks of physical devices, machines, vehicles, home alliances and many other objects connected to each other and provided with a connectivity to the Internet and the ability to collect and exchange data without requiring human-to-human or human-to-computer interactions.

For example, in IoT applications, the communication system 10 may be a wireless network, for example a wireless IoT/M2M network representing low energy power-consumption/long battery life/low-latency/low hardware and operating cost/high connection density constraints such as low-power wide area networks and low-power short-range IoT networks. Exemplary technologies used in such applications may comprise 5G, LTE-NB1 (Long Term Evolution-Machine to Machine, Narrow Band) and NB-IoT (NarrowBand IoT).

The communication system 10 may be used in various consumer, commercial, industrial, and infrastructure applications. Exemplary consumer applications comprise connected vehicles (Internet of Vehicles IoV), home automation/smart home, smart cities, wearable technology, and connected health. Exemplary commercial applications comprise medical and healthcare and transportation. In the medical field, a digitized healthcare system connecting medical resources and healthcare services may be used in which special monitors and sensors are used to enable remote health monitoring and emergency notification. Exemplary industrial applications comprise applications in agriculture, for example in farming using sensors, to collect data on temperature, rainfall, humidity, wind speed, and soil content. Exemplary infrastructure applications may comprise the use of IoT devices to perform monitoring and controlling operations of urban and rural infrastructures such as bridges and railway tracks.

The transmitter 1 and/or the receiver 5 may be any physical internet-enabled device/object provided with required hardware and/or software technologies enabling communication over Internet. The transmitter 1 and/or the receiver 5 may be any standard internet connected-devices such as desktop computers, servers, virtual machines laptops, smart-phones, tablets. In some applications, the transmitter 1 and/or the receiver 5 may be any IoT/M2M device or connected device operating in an IoT/M2M network such as medical devices, temperature and weather monitors, connected cards, thermostats, appliances, security devices, drones, smart clothes, eHealth devices, robots, and smart outlets.

Embodiments of the present invention can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

It should be noted that the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

While embodiments of the invention have been illustrated by a description of various examples, and while these embodiments have been described in considerable detail, it is not the intent of the applicant to restrict or in any way limit the scope of the appended claims to such detail.

In particular, although the invention has particular advantages in embodiments using OFDM modulation, the invention also applies to other type of single-carrier and multi-carrier modulation. Depending on the type of single-carrier or multi-carrier modulation, the sequence selector 102 may select time or frequency-domain signals which have low or zero cross-correlation and desirable spectral and energy characteristics. For example, in the case of time-domain signals for narrowband channels, the sequence selector 102 may select among a set of modulated Walsh-Hadamard sequences with appropriate time-domain filtering for particular system constraints and very low-PAPR.

Additional advantages and modifications will readily appear to those skilled in the art. The invention in its broader aspects is therefore not limited to the specific details, representative methods, and illustrative examples shown and described.

**Claims**

1. A transmitter device (1) for transmitting a digital input message corresponding to control data used in a control channel through a communication channel, the transmitter device comprising a set of transmit antennas, the message m comprising a number B of bits, said device comprising:

   - a sequence selector (102) configured to determine, from said B channel bits, a sequence ($r_l(m)$), associated with a sequence index, comprising a set of low peak-to-average power ratio vectors depending on the message;
   - a code sequence generator (103) configured to generate an outer code sequence ($w_l(m)$) from said B channel bits;
   - a combiner (104) configured to combine said sequence of low peak-to-average power ratio vectors ($r_l(m)$) with said outer code sequence ($w_l(m)$), the transmitter device (1) comprising an modulator for each transmit antenna configured to apply a single carrier or multi-carrier modulation to the combined sequence, the transmitter device being configured to transmit the modulated combined sequence over the communication channel using said transmit antennas.

2. The device of claim 1, wherein it further comprises a splitter (100) configured to split the bitstream comprising said B channel bits into a first components of size $B_0$ and a second component of size $B_1$, such that $B = B_0 + B_1$, using a set of parameters.

3. The device of claim 2, wherein the parameters comprise user preferences and/or system preferences.

4. The transmitter device of any preceding claim, wherein each modulator is an OFDM modulator providing OFDM symbols grouped into resource blocks, each resource block comprising resource elements, and wherein the sequence ($r_l(m)$) of low peak-to-average power ratio vectors comprising $L$ vectors of dimension $\alpha K$, where $L$ represents the number of OFDM symbols, $K$ represents the minimal number of resource blocks and $\alpha$ represents the number of resource elements comprised in each resource block.

5. The transmitter device of any preceding claim, wherein said combiner is configured to multiply said sequence of low peak-to-average power ratio vectors ($r_{k,l}(m)$) by said outer code sequence ($w_l(m)$).

6. The transmitter device of any preceding claim, wherein the sequence selector (102) is configured to determine said sequence ($r_l(m)$) of low peak-to-average power ratio vectors such that the peak-to-average power ratio of the resulting time waveform after the modulation is minimized.

7. The device of any preceding claim, wherein the sequence selector (102) is configured to determine said sequence ($r_l(m)$) of low peak-to-average power ratio vectors that minimizes the number of non-zero elements in said low peak-to-average power ratio vectors.

8. The device of any preceding claim, wherein said the code sequence generator (103) is configured to generate said outer code sequence ($w_l(m)$) as an orthogonal outer code depending on a code generation condition related to the product of the dimension of the low peak-to-average power ratio vectors ($\alpha K$) by the number of low peak-to-average power ratio vectors ($L$) with respect to a threshold, said threshold relating to the number B of channel bits, the code generation condition being satisfied if said product ($\alpha K$) is higher or equal to said threshold.

9. The device of claim 8, wherein said threshold is equal to two raised to the number $B$ of channel bits ($2^B$).

10. The device of any preceding claim 8 and 9, wherein if said code generation condition is satisfied, an $L$-dimensional Discrete Fourier Transform-based orthogonal code is used to generate said outer code sequence ($w_l(m)$).

11. The device of claim 2 and 8, wherein if said code generation condition is satisfied, and the number B of channel bits satisfy a channel bit condition according to which the number of channel bit is comprised between a lower threshold and an upper threshold, said lower threshold and said upper threshold depending on the size $B_0$ of the first component, the code sequence generator (103) is configured to generate the orthogonal outer code as a combination of $2^{B-B_0}L$-dimensional vectors.

12. The device of claim 11, wherein the code sequence generator (103) is configured to generate said combination of

$2^{B-B_0}$ $L$-dimensional vectors from the set $\{\omega_L: \omega_{l,n} = e^{j2\pi ln/L}, l = 0,1, ...,L - 1, n = 0,1, ..., L - 1\}$, said orthogonal outer

code ($w_l(m)$) being selected as element $\lfloor m2^{-B_0} \rfloor$ from the chosen set.

**13.** The device of claim 12, wherein if the number of channel bit is strictly higher than the upper threshold, the code sequence generator (103) is configured to generate said combination of vectors as a combination of $\left\lceil \dfrac{2^B}{12K} \right\rceil$ $L$-di-

mensional vectors from the set $\omega_L: \omega_{l,n} = e^{j2\pi ln/L}, l = 0,1, ...,L - 1, n = 0,1, ...,L - 1\}$, $w_l(m)$ being selected as element

$\left\lfloor \dfrac{m}{12K} \right\rfloor$ from the chosen set.

**14.** The device of claim 2 and 8, wherein said code sequence generator (103) is configured to generate said outer code

sequence $w_l(m)$ as a non coherent outer code if said condition is not satisfied ($\alpha KL < 2^B$), the outer code $w_l(m)$ being

chosen as a codeword $\lfloor m2^{-B_0} \rfloor$ from a ($L$, $B_1$) linear error correcting code, of length L and a rank $B_1$ corresponding
to the size of the second component.

**15.** A method of transmitting a digital input message corresponding to control data used in a control channel (PUCCH
or PRACH) through a communication channel (3), the message (m) comprising a number $B$ of bits, said method
comprising:

- determining, from the B channel bits, a sequence ($r_l(m)$), associated with a sequence index, comprising a set
of low peak-to-average power ratio vectors, which depend on the message;
- generating an outer code sequence $w_l(m)$ from said B channel bits;
- combining said sequence of low peak-to-average power ratio vectors ($r_l(m)$) with said outer code sequence
($w_l(m)$),

the method further comprising applying a single-carier or multi-carrier modulation to the combined sequence and
transmitting the modulated combined sequence over the communication channel using transmit antennas.

**Patentansprüche**

**1.** Sendevorrichtung (1) zum Senden einer digitalen Eingangsnachricht entsprechend in einem Steuerkanal verwendeten Steuerdaten über einen Kommunikationskanal, wobei die Sendevorrichtung einen Satz von Sendeantennen
umfasst, wobei die Nachricht m eine Anzahl B von Bits umfasst, wobei die Vorrichtung Folgendes umfasst:

- einen Sequenzselektor (102), konfiguriert zum Bestimmen, von den B Kanalbits, einer Sequenz ($r_l(m)$), die
einem Sequenzindex zugeordnet ist, der einen Satz von Vektoren mit niedrigem Spitzen-zu-Durchschnittsleistungsverhältnis in Abhängigkeit von der Nachricht umfasst;
- einen Codesequenzgenerator (103), der zum Erzeugen einer äußeren Codesequenz ($w_l(m)$) aus den B Kanalbits konfiguriert ist;
- einen Kombinierer (104), der zum Kombinieren der Sequenz von Vektoren mit niedrigem Spitzen-zu-Durch-
schnittsleistungsverhältnis $(r_l(m))$ mit der äußeren Codesequenz ($w_l(m)$) konfiguriert ist, wobei die Sendevorrichtung (1) einen Modulator für jede Sendeantenne umfasst, der zum Anwenden einer Einzelträger- oder
Mehrträgermodulation auf die kombinierte Sequenz konfiguriert ist, wobei die Sendevorrichtung zum Senden
der modulierten kombinierten Sequenz über den Kommunikationskanal unter Verwendung der Sendeantennen
konfiguriert ist.

**2.** Vorrichtung nach Anspruch 1, wobei sie ferner einen Splitter (100) umfasst, der zum Aufteilen des die B Kanalbits
umfassenden Bitstroms in eine erste Komponente der Größe $B_0$ und eine zweite Komponente der Größe $B_1$, sodass
$B = B_0 + B_1$ ist, unter Verwendung eines Satzes von Parametern, konfiguriert ist.

**3.** Vorrichtung nach Anspruch 2, wobei die Parameter Benutzerpräferenzen und/oder Systempräferenzen umfassen.

4. Sendevorrichtung nach einem vorhergehenden Anspruch, wobei jeder Modulator ein OFDM-Modulator ist, der OFDM-Symbole bereitstellt, die in Ressourceblöcke gruppiert sind, wobei jeder Ressourceblock Ressourcenelemente umfasst, und wobei die Sequenz ($r_l(m)$) von Vektoren mit niedrigem Spitzen-zu-Durchschnittsleistungsverhältnis $L$ Vektoren der Dimension $\alpha K$ umfasst, wobei $L$ die Anzahl von OFDM-Symbolen darstellt, K die minimale Anzahl von Ressourceblöcken darstellt und $\alpha$ die Anzahl von Ressourcenelementen darstellt, die jeder Ressourceblock umfasst.

5. Sendevorrichtung nach einem vorhergehenden Anspruch, wobei der Kombinierer zum Multiplizieren der Sequenz von Vektoren ($r_{k,l}(m)$) mit niedrigem Spitzen-zu-Durchschnittsleistungsverhältnis mit der äußeren Codesequenz ($w_l(m)$) konfiguriert ist.

6. Sendevorrichtung nach einem vorhergehenden Anspruch, wobei der Sequenzselektor (102) zum Bestimmen der Sequenz ($r_l(m)$) von Vektoren mit niedrigem Spitzen-zu-Durchschnittsleistungsverhältnis konfiguriert ist, sodass das Spitzen-zu-Durchschnittsleistungsverhältnis der resultierenden Zeitwellenform nach der Modulation minimiert ist.

7. Vorrichtung nach einem vorhergehenden Anspruch, wobei der Sequenzselektor (102) zum Bestimmen der Sequenz ($r_l(m)$) von Vektoren mit niedrigem Spitzen-zu-Durchschnittsleistungsverhältnis konfiguriert ist, die die Anzahl von Nicht-Null-Elementen in den Vektoren mit niedrigem Spitzen-zu-Durchschnittsleistungsverhältnis minimiert.

8. Vorrichtung nach einem vorhergehenden Anspruch, wobei der Codesequenzgenerator (103) zum Erzeugen der äußeren Codesequenz ($w_l(m)$) als einen orthogonalen äußeren Code in Abhängigkeit von einer Codeerzeugungsbedingung konfiguriert ist, die sich auf das Produkt aus der Dimension der Vektoren ($\alpha K$) mit niedrigem Spitzen-zu-Durchschnittsleistungsverhältnis und der Anzahl von Vektoren (L) mit niedrigem Spitzen-zu-Durchschnittsleistungsverhältnis in Bezug auf einen Schwellenwert bezieht, wobei sich der Schwellenwert auf die Anzahl B von Kanalbits bezieht, wobei die Codeerzeugungsbedingung erfüllt ist, wenn das Produkt ($\alpha K$) größer als oder gleich dem Schwellenwert ist.

9. Vorrichtung nach Anspruch 8, wobei der Schwellenwert gleich zwei potenziert mit der Anzahl B von Kanalbits ($2^B$) ist.

10. Vorrichtung nach einem der vorhergehenden Ansprüche 8 und 9, wobei, wenn die Codeerzeugungsbedingung erfüllt ist, ein $L$-dimensionaler, auf diskreter FourierTransformation basierender orthogonaler Code verwendet wird, um die äußere Codesequenz ($w_l(m)$) zu erzeugen.

11. Vorrichtung nach Anspruch 2 und 8, wobei, wenn die Codeerzeugungsbedingung erfüllt ist und die Anzahl B von Kanalbits eine Kanalbitbedingung erfüllt, gemäß der die Anzahl von Kanalbits zwischen einem unteren Schwellenwert und einem oberen Schwellenwert liegt, wobei der untere Schwellenwert und der obere Schwellenwert von der Größe $B_0$ der ersten Komponente abhängen, der Codesequenzgenerator (103) zum Erzeugen des orthogonalen äußeren Codes als eine Kombination von $2^{B-B_0}$ $L$-dimensionalen Vektoren konfiguriert ist.

12. Vorrichtung nach Anspruch 11, wobei der Codesequenzgenerator (103) zum Erzeugen der Kombination von $2^{B-B_0}$ $L$-dimensionalen Vektoren aus der Menge $\{\omega_L : \omega_{l,n} = e^{j2\pi ln/L}, l = 0, 1, ..., L-1, n = 0, 1, ..., L-1\}$ konfiguriert ist, wobei der orthogonale äußere Code ($w_l(m)$) als Element $\left[ m2^{-B}_{\phantom{0}0} \right]$ aus der gewählten Menge ausgewählt wird.

13. Vorrichtung nach Anspruch 12, wobei, wenn die Anzahl von Kanalbits streng über dem oberen Schwellenwert liegt, der Codesequenzgenerator (103) zum Erzeugen der Kombination von Vektoren als eine Kombination von $\left\lceil \frac{2^B}{12K} \right\rceil$ $L$-dimensionalen Vektoren aus der Menge $\omega_L : \omega_{l,n} = e^{j2\pi ln/L}, l = 0, 1, ..., L-1, n = 0, 1, ..., L-1\}$, konfiguriert ist, wobei $w_l(m)$ als Element $\left\lceil \frac{m}{12K} \right\rceil$ aus der gewählten Menge ausgewählt wird.

14. Vorrichtung nach Anspruch 2 und 8, wobei der Codesequenzgenerator (103) zum Erzeugen der äußeren Codesequenz $w_l(m)$ als einen nicht kohärenten äußeren Code konfiguriert ist, wenn die Bedingung nicht erfüllt ist ($\alpha KL <$

**19**

2B), wobei der äußere Code $w_l(m)$ als ein Codewort $[m2^{-B}{}_0]$ aus einem $(L,B_1)$ linearen Fehlerkorrekturcode mit einer Länge L und einem Rang $B_1$ entsprechend der Größe der zweiten Komponente ausgewählt wird.

15. Verfahren zum Senden einer digitalen Eingangsnachricht entsprechend in einem Steuerkanal (PUCCH oder PRACH) verwendeten Steuerdaten über einen Kommunikationskanal (3), wobei die Nachricht (m) eine Anzahl B von Bits umfasst, wobei das Verfahren Folgendes umfasst:

  - Bestimmen, aus den B Kanalbits, einer Sequenz ($r_l(m)$), die einem Sequenzindex zugeordnet ist, der einen Satz von Vektoren mit niedrigem Spitzen-zu-Durchschnittsleistungsverhältnis umfasst, die von der Nachricht abhängen;
  - Erzeugen einer äußeren Codesequenz $w_l(m)$ aus den B Kanalbits;
  - Kombinieren der Sequenz von Vektoren mit niedrigem Spitzen-zu-Durchschnittsleistungsverhältnis *($r_l(m)$)* mit der äußeren Codesequenz *($w_l(m)$),*

wobei das Verfahren ferner das Anwenden einer Einzelträger- oder Mehrträgermodulation auf die kombinierte Sequenz und das Senden der modulierten kombinierten Sequenz über den Kommunikationskanal unter Verwendung von Sendeantennen umfasst.

## Revendications

1. Dispositif émetteur (1) pour transmettre un message d'entrée numérique correspondant à des données de contrôle utilisées dans un canal de contrôle à travers un canal de communication, le dispositif émetteur comprenant un ensemble d'antennes d'émission, le message m comprenant un nombre B de bits, ledit dispositif comprenant :

  - un sélecteur de séquence (102) configuré pour déterminer, à partir desdits B bits de canal, une séquence ($r_l(m)$), associée à un indice de séquence, comprenant un ensemble de vecteurs à faible rapport puissance de crête/moyenne en fonction du message ;
  - un générateur de séquence de code (103) configuré pour générer une séquence de code externe ($w_l(m)$) à partir desdits B bits de canal ;
  - un combinateur (104) configuré pour combiner ladite séquence de vecteurs à faible rapport puissance crête/moyenne ($r_l(m)$) avec ladite séquence de code externe ($w_l(m)$),

le dispositif émetteur (1) comprenant un modulateur pour chaque antenne d'émission configuré pour appliquer une modulation à porteuse unique ou à porteuses multiples à la séquence combinée, le dispositif émetteur étant configuré pour transmettre la séquence combinée modulée sur le canal de communication en utilisant lesdites antennes d'émission.

2. Dispositif selon la revendication 1, dans lequel il comprend en outre un séparateur (100) configuré pour diviser le flux binaire comprenant lesdits B bits de canal en une première composante de taille $B_0$ et une deuxième composante de taille $B_1$, de sorte que $B = B_0 + B_1$, à l'aide d'un ensemble de paramètres.

3. Dispositif selon la revendication 2, dans lequel les paramètres comprennent des préférences de l'utilisateur et/ou des préférences de système.

4. Dispositif émetteur selon l'une quelconque des revendications précédentes, dans lequel chaque modulateur est un modulateur MROF fournissant des symboles MROF groupés en blocs de ressources, chaque bloc de ressources comprenant des éléments de ressources, et dans lequel la séquence ($r_l(m)$) de vecteurs à faible rapport puissance crête/moyenne comprend $L$ vecteurs de dimension $\alpha K$, où $L$ représente le nombre de symboles MROF, $K$ représente le nombre minimal de blocs de ressources et $\alpha$ représente le nombre d'éléments de ressources compris dans chaque bloc de ressources.

5. Dispositif émetteur selon l'une quelconque des revendications précédentes, dans lequel ledit combinateur est configuré pour multiplier ladite séquence de vecteurs à faible rapport puissance crête/moyenne ($r_{k,l}(m)$) par ladite séquence de code externe ($w_l(m)$).

**6.** Dispositif émetteur selon l'une quelconque des revendications précédentes, dans lequel le sélecteur de séquence (102) est configuré pour déterminer ladite séquence ($r_l(m)$) de vecteurs à faible rapport de puissance crête/moyenne de sorte que le rapport de puissance crête/moyenne de la forme d'onde temporelle résultante après la modulation soit minimisé.

**7.** Dispositif selon l'une quelconque des revendications précédentes, dans lequel le sélecteur de séquence (102) est configuré pour déterminer ladite séquence ($r_l(m)$) de vecteurs à faible rapport de puissance crête/moyenne qui minimise le nombre d'éléments non nuls dans lesdits vecteurs à faible rapport de puissance crête/moyenne.

**8.** Dispositif selon l'une quelconque des revendications précédentes, dans lequel ledit générateur de séquence de code (103) est configuré pour générer ladite séquence de code externe ($w_l(m)$) en tant que code externe orthogonal en fonction d'une condition de génération de code liée au produit de la dimension des vecteurs à faible rapport de puissance crête/moyenne ($\alpha K$) par le nombre de vecteurs à faible rapport de puissance crête/moyenne ($L$) par rapport à un seuil, ledit seuil se rapportant au nombre B de bits de canal, la condition de génération de code étant satisfaite si ledit produit ($\alpha K$) est supérieur ou égal audit seuil.

**9.** Dispositif selon la revendication 8, dans lequel ledit seuil est égal à deux élevé à la puissance du nombre B de bits de canal ($2^B$).

**10.** Dispositif selon l'une quelconque des revendications précédentes 8 et 9, dans lequel, si ladite condition de génération de code est satisfaite, un code orthogonal basé sur la transformée de Fourier discrète $L$-dimensionnel est utilisé pour générer ladite séquence de code externe ($w_l(m)$).

**11.** Dispositif selon les revendications 2 et 8, dans lequel si ladite condition de génération de code est satisfaite, et que le nombre B de bits de canal satisfait une condition de bit de canal selon laquelle le nombre de bits de canal est compris entre un seuil inférieur et un seuil supérieur, ledit seuil inférieur et ledit seuil supérieur dépendant de la taille $B_0$ de la première composante, le générateur de séquence de code (103) est configuré pour générer le code externe orthogonal comme une combinaison de $2^{B-B_0}$ vecteurs $L$-dimensionnels.

**12.** Dispositif selon la revendication 11, dans lequel le générateur de séquence de code (103) est configuré pour générer ladite combinaison de $2^{B-B_0}$ vecteurs $L$-dimensionnels à partir de l'ensemble $\{\omega_L:\omega_{l,n} = e^{j2\pi ln/L}, 1 = 0,1, ..., L - 1, n = 0,1, ..., L - 1\}$, ledit code externe orthogonal ($w_l(m)$) étant sélectionné en tant qu'élément $\left[m2^{-B0}\right]$ de l'ensemble choisi.

**13.** Dispositif selon la revendication 12, dans lequel si le nombre de bits de canal est strictement supérieur au seuil supérieur, le générateur de séquence de code (103) est configuré pour générer ladite combinaison de vecteurs comme une combinaison de $\left[\dfrac{2^B}{12K}\right]$ vecteurs $L$-dimensionnels de l'ensemble $\{\omega_L:\omega_{l,n} = e^{j2\pi ln/L}, l = 0,1, ..., L - 1, n = 0,1, ..., L - 1\}$, $w_l(m)$ étant sélectionné en tant qu'élément $\left[\dfrac{m}{12K}\right]$ de l'ensemble choisi.

**14.** Dispositif selon les revendications 2 et 8, dans lequel ledit générateur de séquence de code (103) est configuré pour générer ladite séquence de code externe $w_l(m)$ en tant que code externe non cohérent si ladite condition n'est pas remplie ($\alpha KL < 2^B$), le code externe $w_l(m)$ étant choisi en tant que mot de code $[m2^{-B0}]$ d'un code linéaire à correction d'erreurs ($L,B_1$), de longueur L et de rang $B_1$ correspondant à la taille de la deuxième composante.

**15.** Procédé de transmission d'un message d'entrée numérique correspondant à des données de contrôle utilisées dans un canal de contrôle (PUCCH ou PRACH) à travers un canal de communication (3), le message (m) comprenant un nombre $B$ de bits, ledit procédé comprenant les étapes consistant à :

    - déterminer, à partir des B bits du canal, une séquence ($r_l(m)$), associée à un indice de séquence, comprenant un ensemble de vecteurs à faible rapport de puissance crête/moyenne, qui dépendent du message ;
    - générer une séquence de code externe ($w_l(m)$) à partir desdits B bits de canal ;
    - combiner ladite séquence de vecteurs à faible rapport puissance crête/moyenne ($r_l(m)$) avec ladite séquence

de code externe ($w_l(m)$),

le procédé comprenant en outre l'application d'une modulation à porteuse unique ou à porteuses multiples à la séquence combinée et la transmission de la séquence combinée modulée sur le canal de communication à l'aide d'antennes d'émission.

**10**

Transmitter → Transmission channel → Receiver

**FIGURE 1**

**1**

Splitter → Sequence selector (102) / Code sequence generator (103) → Combiner (104) → Single-carrier or multi-carrier modulators (14)

**FIGURE 2**

20

201 202 203

| Calculation unit | | Metric determination unit | | Selection unit |

**FIGURE 3**

| Receiving splitting parameters | 400 |

| Splitting the Bitstream B into $B_0$ and $B_1$ | 402 |

| Determining a sequence $(r_l(m))$ of low peak-to-average power ratio | 404 |

| Determining an outer code sequence $w_l(m)$ from said bitstream of B channel bits | 406 |

| Combining said sequence of low peak-to-average power ratio vectors $(r_l(m))$ with said outer code sequence $(w_l(m))$. | 408 |

| Applying single-carrier or multi-carrier modulation and transmitting the modulated combined sequence | 409 |

**FIGURE 4**

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8315185 B2
- EP 20305929

**Non-patent literature cited in the description**

- **GABI SARKIS ; PASCAL GIARD ; ALEXANDER VARDY ; CLAUDE THIBEAULT ; WARREN J. GROSS.** Fast List Decoders for Polar Codes. *IEEE Jounal on Selected Areas in Communications,* February 2016, vol. 34 (2
- **QUALCOMM INCORPORATED.** Potential coverage enhancement techniques for PUCCH. *3GPP document R1-2006821,* 17 August 2020
- **HUAWEI, HISILICON.** Correction on formula for Low-PAPR sequence generation. *3GPP Change request R1-1800843,* 22 January 2018
- FL summary of PUCCH coverage enhancement. *3GPP document R1- 2007473,* 17 August 2020
- NR: Multiplexing and Channel Coding, 3GPP Technical Specification, Release 16, V16.3. *3GPP specification 38.212: [38.212,* 01 October 2020
- NR; Physical Channels and Modulation, 3GPP Technical Specification, Release 16, V16.3. *3GPP specification 38.211 ([38.211,* 01 October 2020